(19) **Europäisches Patentamt / European Patent Office / Office européen des brevets**

(11) **EP 2 084 433 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(51) Int Cl.:
***F16H 57/08*** *(2006.01)*

(21) Anmeldenummer: **07821141.4**

(22) Anmeldetag: **10.10.2007**

(86) Internationale Anmeldenummer:
**PCT/EP2007/060773**

(87) Internationale Veröffentlichungsnummer:
**WO 2008/049730 (02.05.2008 Gazette 2008/18)**

(54) **PLANETENRAD-EINHEIT UND VERFAHREN ZUR HERSTELLUNG EINER PLANETENRAD-EINHEIT**

PLANETARY GEAR UNIT AND METHOD FOR PRODUCING A PLANETARY GEAR UNIT

ENSEMBLE DE PIGNON SATELLITE ET PROCÉDÉ DE FABRICATION D'UN ENSEMBLE DE PIGNON SATELLITE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.10.2006 DE 102006049996**

(43) Veröffentlichungstag der Anmeldung:
**05.08.2009 Patentblatt 2009/32**

(73) Patentinhaber: **ZF Friedrichshafen AG
88038 Friedrichshafen (DE)**

(72) Erfinder:
• **BÜCHNER, Tobias
66557 Illingen (DE)**
• **HÖHNE, Peter
66299 Friedrichsthal (DE)**

(56) Entgegenhaltungen:
**EP-A- 1 214 536     DE-C- 697 557**

**Beschreibung**

Die Erfindung betrifft eine Planetenrad-Einheit nach dem Oberbegriff des Patentanspruches 1.

Eine Planetenrad-Einheit, auch Planetenradsatz genannt, besteht im Allgemeinen aus einem Planetenträger (Planetenradträger), im Planetenträger gelagerten Planetenbolzen (Planetenradbolzen) sowie Planeten (Planetenrädern), welche auf den Planetenbolzen gelagert sind. Der Planetenträger kann aus einem Umformteil mit abgewinkelten Armen und einer Führungsscheibe aufgebaut sein oder aus zwei parallel angeordneten Führungsscheiben bestehen, welche über Nietbolzen miteinander verbunden werden. Ein derartiger Planetenträger wurde durch die EP 1 214 536 B1 der Anmelderin bekannt, wobei die Nietbolzen mit den Führungsscheiben verstemmt sind. Die Führungsscheiben sind als Feinschneidteile hergestellt und weisen Lochungen auf, in welche stirnseitig angeordnete Zapfen der Nietbolzen eingesetzt und anschließend verstemmt werden. Beim Verstemmen des Zapfens greifen Ringzacken einerseits von der Werkzeugseite und andererseits von der Nietbolzenseite in die Führungsscheiben ein und verhindern somit ein Ausweichen des Materials.

Das Feinschneiden ist ein bekanntes Verfahren, welches gemäß K. Lange, Umformtechnik, Band 3, Blechbearbeitung, Springer-Verlag 1990, Seite 152 ff wie folgt definiert ist: "Feinschneiden ist Ausschneiden und Lochen von Werkstücken aus Metallflachprodukten bei gezielt geändertem Spannungszustand in der Scherzone ohne Rissbildung in der als Funktionsfläche verwendbaren Schnittfläche mittels Schneidplatte, Schneidstempel, Niederhalter und Auswerfer." Unmittelbar vor dem Schneiden wird eine Ringzacke in geringem Abstand von der Schnittlinie in das Werkstück (Blech) gepresst, wodurch im Scherbereich Druckspannungen überlagert werden. Dies hat letztendlich die glatte und rissfreie Schnittfläche zur Folge.

Durch die EP 1 266 154 B1 der Anmelderin wurde ein Verfahren zum positionsgenauen Zusammenbau einer Planetenrad-Einheit bekannt, wobei Planetenbolzen auf ähnliche Weise wie die zuvor genannten Nietbolzen mit den Führungsscheiben verstemmt werden. Die Planetenbolzen weisen stirnseitig jeweils Schultern und Zapfen auf, welche in Lochungen der Führungsscheiben mit radialem Spiel eingesetzt werden. Danach werden die Zapfen verstemmt und die Radialspalte durch das nach außen verdrängte Material der Zapfen gefüllt. Durch Eingriff von Ringzacken wird das Material der Führungsscheiben im Bereich der Lochungen eingespannt.

Durch die DE 10 2004 057 576 A1 der Anmelderin wurde ein weiteres Verfahren zum positionsgenauen Zusammenbau einer Planetenrad-Einheit bekannt, wobei die Planetenbolzen vor dem Verstemmen gegenüber den Führungsscheiben zentriert und ausgerichtet werden. Die Planetenbolzen weisen stirnseitig offene Längsbohrungen auf, in welche kegelförmige Spitzen von gegenläufigen Stempeln eingreifen und somit eine Ausrichtung bewirken.

Problematisch bei den bekannten Verfahren zum Zusammenbau einer Planetenrad-Einheit ist die genaue Zentrierung und Ausrichtung der Planetenbolzen, sodass ein optimaler Zahneingriff der Planetenräder mit dem zugehörigen Sonnen- und Hohlrad gewährleistet ist. Hier ergeben sich noch Potentiale.

Der Erfindung liegt die Aufgabe zu Grunde, eine Planetenrad-Einheit der eingangs genannten Art hinsichtlich ihres Aufbaues derart zu verbessern, dass eine genaue Zentrierung und Ausrichtung der Bolzen, insbesondere der Planetenbolzen erreicht wird.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass die Bolzen umlaufende Schneidkanten aufweisen und mittels dieser Schneidkanten in die Führungsscheiben eingeschnitten sind. Die Bolzen weisen dabei im Bereich ihrer umlaufenden Schneidkanten einen Durchmesser auf, der größer als die vorgelochte Öffnung in den Führungsscheiben ist, d. h. die Bolzen weisen ein Übermaß gegenüber dem Lochungsdurchmesser auf. Mit dem Einschneiden der Bolzen in die Führungsscheiben werden ein spielfreier Sitz und eine glatte Fläche zur Übertragung von Kräften zwischen dem Bolzen und den Führungsscheiben erreicht. Die Bolzen können teilweise oder ganz in die Führungsscheiben eingeschnitten sein, beim "Durchschneiden" wird ein ringförmiges Abfallteil erzeugt.

Die Planetenrad-Einheit umfasst vorzugsweise einen Planetenträger, welcher aus zwei Führungsscheiben gebildet wird, die durch Nietbolzen miteinander verbunden sind. Möglich ist allerdings auch ein Planetenträger, welcher keine Nietbolzen aufweist, sondern ein Umformteil mit die Nietbolzen ersetzenden Armen, welche mit einer Führungsscheibe verbunden sind. Die Bolzen können vorzugsweise als Planetenbolzen, als Nietbolzen oder auch als Niet- und Planetenbolzen ausgebildet sein, die somit sowohl die Funktion eines Planetenbolzens als auch die eines Nietbolzens erfüllen. Mit dem Einschneiden der Bolzen in die Führungsscheiben wird auch der Vorteil erreicht, dass nur geringe Kräfte in radialer Richtung in die Führungsscheiben eingeleitet werden - im Gegensatz zum Stand der Technik -, wo infolge Verstemmens eine radiale Aufweitung erfolgt.

Eine bevorzugte Ausführung der Erfindung sieht vor, dass die Einschnitttiefe, d. h. der Weg der Schneidkanten in das Material der Führungsscheiben etwa der halben Dicke der Führungsscheiben entspricht. Das von den Schneidkanten verdrängte Material der Führungsscheiben liegt nach Beendigung des Einschneidvorganges an den Schultern und den Zapfen der Bolzen an. Die Außenseite der Führungsscheiben bleibt somit flach. Der Ring von verdrängtem Material bildet somit ein axiales Widerlager der Planetenbolzen in den Führungsscheiben.

Ein Ausführungsbeispiel der Erfindung ist in der Zeichnung dargestellt und wird im Folgenden näher beschrieben.

Es zeigen:

Fig. 1    einen Ausschnitt einer Planetenrad-Einheit nach einem ersten Verfahrenschritt,

Fig. 1a    eine Einzelheit X aus Fig. 1,

Fig. 2    den Ausschnitt der Planetenrad-Einheit nach einem zwei- ten Verfahrenschritt und

Fig. 3    den Ausschnitt der Planetenrad-Einheit nach dem letzten Verfahrensschritt, d. h. im fertigen Zustand.

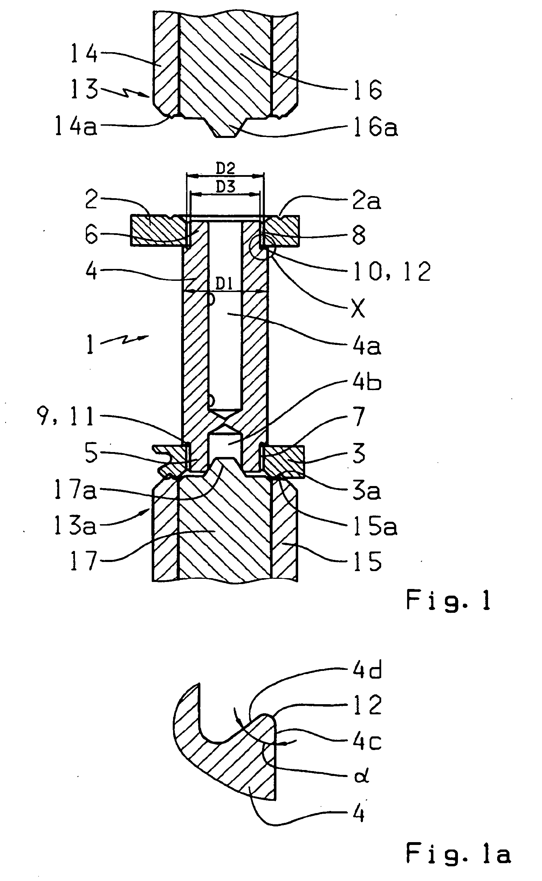

**Fig. 1** zeigt einen Ausschnitt einer vormontierten Planetenrad-Einheit 1, von welcher eine erste Führungsscheibe 2 und eine zweite Führungsscheibe 3 teilweise dargestellt sind. Beide Führungsscheiben 2, 3 können durch nicht dargestellte Nietbolzen miteinander verbunden werden, oder eine der beiden Führungsscheiben kann als topfförmiges Umformteil mit Armen ausgebildet sein, welche die Funktion von Nietbolzen übernehmen. Zwischen den beiden Führungsscheiben 2, 3 ist ein Planetenbolzen 4 angeordnet, welcher stirnseitig Zapfen 5, 6 aufweist. In den Führungsscheiben 2, 3 sind Bohrungen 7, 8 (Lochungen) angeordnet, die vorzugsweise - ebenso wie die gesamten Führungsscheiben 2, 3 - durch Feinschneiden hergestellt werden - daraus ergeben sich glatte und rissfreie Schnittflächen. Der Planetenbolzen 4 weist zwischen den Führungsscheiben 2, 3 einen Außendurchmesser D1, die Bohrung 8 weist einen Innendurchmesser D2 und der Zapfen 6 weist einen Außendurchmesser D3 auf, wobei folgende Beziehung gilt:

$$D1 > D2 > D3.$$

Der Außendurchmesser D1 des Planetenbolzens 4 ist gegenüber den Zapfen 5, 6 über eine Schulter 9, 10 abgesetzt, welche in ihrem radial äußeren Bereich als umlaufende Schneidkante 11, 12 ausgebildet ist, welche in vergrößerter Darstellung in Fig. 1a gezeigt ist. Der Planetenbolzen 4 weist eine Längsbohrung 4a auf, welche zur Stirnseite des Zapfens 6 offen ist, sowie ein koaxial angeordnetes Sackloch 4b, welches zur Stirnseite des Zapfens 5 offen ist. Fig. 1 zeigt ferner eine Vorrichtung 13 zur Durchführung des erfindungsgemäßen Verfahrens zum Herstellen, insbesondere zum positionsgenauen Zusammenbau der Planetenrad-Einheit 1. Die Vorrichtung 13 weist ein Unterteil 13a und ein Oberteil 13b auf, welche jeweils aus einem hülsenförmigen Drückwerkzeug 14, 15 und einem darin längsbeweglich geführten Stempel 16, 17 bestehen. Die hülsenförmigen Drückwerkzeuge 15, 16 weisen an ihren Stirnflächen jeweils eine umlaufende Ringzacke 14a, 15a auf, welche in eine ringförmige Rille 2a, 3a der Führungsscheiben 2, 3 eingreifen. Die Stempel 16, 17 weisen an ihren Stirnseiten kegelstumpfförmige Spitzen 16a, 17a auf, welche in die Längsbohrung 4a bzw. das Sackloch 4b eingreifen. Die in Fig. 1 dargestellte Position der Vorrichtung 13 zeigt das Unterteil 13a in Eingriff, während das Oberteil 13b noch außer Eingriff ist. Die Planetenrad-Einheit 1 liegt mit ihrer unteren Führungsscheibe 3 auf dem hülsenförmigen Drückwerkzeug 15 auf, wobei die Ringzacke 15a in die Ringrille 3a eingreift. Ferner greift der Zentrierzapfen 17a in das Sackloch 4b ein und nimmt somit bereits eine Zentrierung des unteren Teils des Planetenbolzens 4 innerhalb der Bohrung 7 vor. Die Planetenrad-Einheit 1 ist - was nicht dargestellt ist - in dieser Position bereits komplettiert, d. h. alle zwischen den Führungsscheiben 2, 3 anzuordnenden Einzelteile wie Planetenräder, Anlaufscheiben, Nietbolzen sind komplett vormontiert.

**Fig. 1a** zeigt als Einzelheit X aus Fig. 1 die umlaufende Schneidkante 12 der Schulter 10 in vergrößerte Darstellung. Die Schneidkante 12 wird im Wesentlichen durch zwei Flächen gebildet, nämlich die zylindrische Mantelfläche 4c des Planetenbolzens 4 und eine konische oder gewölbte Schneidfläche 4d, welche mit der Mantelfläche 4c einen Schneidwinkel α einschließt, welcher vorzugsweise kleiner als 90° ist. Die Schneidkante 11 ist ebenso ausgebildet.

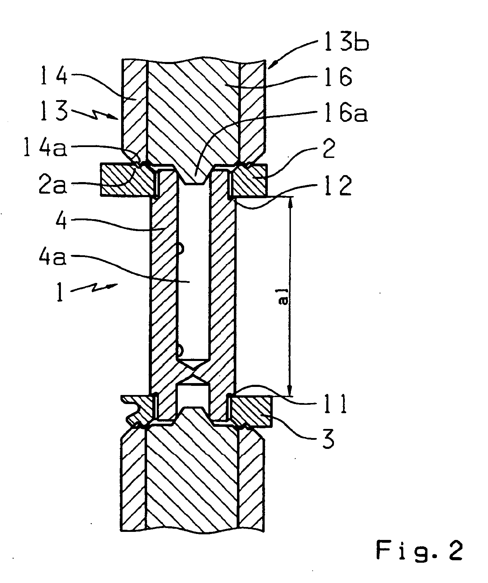

**Fig. 2** zeigt die Planetenrad-Einheit 1 gemäß Fig. 1 sowie die Vorrichtung 13 in einem zweiten Verfahrensschritt. Für gleiche Teile werden gleiche Bezugszahlen wie zuvor verwendet. Der obere Teil 13b der Vorrichtung 13, bestehend aus dem hülsenförmigen Drückwerkzeug 14 und dem darin geführten Stempel 16, ist soweit nach unten gefahren, dass die Zentrierspitze 16a in die Bohrung 4a und die Ringzacke 14a in die Rille 2a eingreifen. Damit wird einerseits eine Zentrierung des Planetenbolzens 4 gegenüber den beiden Führungsscheiben 2, 3 und andererseits eine Verspannung der Führungsscheiben 2, 3 gegenüber den Schneidkanten 12, 11 erreicht. Der Abstand der Innenflächen der beiden Führungsscheiben 2, 3 ist mit a1 gekennzeichnet und entspricht dem Abstand der beiden umlaufenden Schneidkanten 11, 12 in Längsrichtung des Planetenbolzens 4.

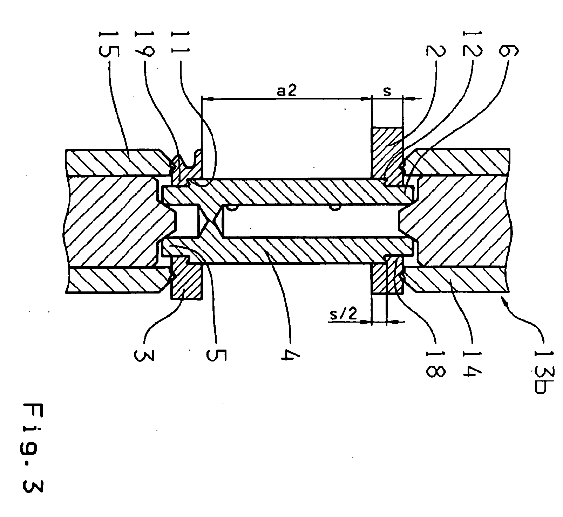

**Fig. 3** zeigt die Planetenrad-Einheit 1 sowie die Vorrichtung 13 nach dem letzten Verfahrensschritt, d. h. die Verbindung zwischen Planetenbolzen 4 und Führungsscheiben 2, 3 ist fertig gestellt. Infolge weiteren Druckausübung sind die hülsenförmigen Drückwerkzeuge 14, 15 gegeneinander gefahren und haben dabei die Führungsscheiben 2, 3 auf einander zu bewegt, sodass sie nunmehr einen Abstand a2 aufweisen, welcher kleiner als der vorherige Abstand a1 gemäß Fig. 2 ist. Gleichzeitig hat sich der Planetenbolzen 4 mit seinen Schneidkanten 11, 12 in das Material der Führungsplatten 2, 3 eingeschnitten, und zwar bis zu einer Einschnitttiefe von s/2, wobei s die Dicke einer Führungsscheibe 2, 3 ist. Das durch den Einschneidvorgang verdrängte Material der Führungsscheiben 2, 3 bildet einen ringförmigen Bereich 18, 19, im Folgenden als Verdrängungsring 18, 19 bezeichnet, welcher sich jeweils in Schneidrichtung vor den Schneidkanten 11, 12 befindet und die Zapfen 5, 6 umschließt, d. h. der vorherige Ringspalt 7, 8 (vgl. Fig. 1) ist zumindest teilweise aufgefüllt. Da das verdrängte Material durch den Schneidvorgang, insbesondere auch durch die in Fig. 1a dargestellte, geneigte Schneidfläche 4d nicht nur nach oben, sondern auch radial nach innen verdrängt wird, bleiben die Außenflächen der Führungsscheiben 2, 3 relativ eben. Das obere Vorrichtungsteil 13b kann jetzt zurückgefahren werden, und die Planetenrad-Einheit 1 kann der Vorrichtung 13 als fertig montiertes Teil entnommen werden.

Das erfindungsgemäße Verfahren zum Einschneiden der Planetenbolzen in die Führungsscheiben kommt dem bekannten Feinschneiden sehr nahe, insbesondere aufgrund der Verwendung der Ringzacken, die der Schubspannung im Scherbereich der Führungsscheibe eine Druckspannung überlagern und somit zu einem Fließen des Materials führen. Dies ergibt eine glatte Schnittfläche in der Führungsscheibe, die weniger kerbempfindlich ist und das Entstehen von Rissen verhindert.

Das oben beschriebene Verfahren kann ebenso auf Nietbolzen oder Bolzen angewendet werden, welche sowohl die Funktion eines Planetenbolzens als auch die eines Nietbolzens erfüllen.

Bezugszeichen

| 1 | Planetenrad-Einheit |
|---|---|
| 2 | Führungsscheibe |
| 2a | Rille |
| 3 | Führungsscheibe |
| 3a | Rille |
| 4 | Planetenbolzen |
| 4a | Längsbohrung |
| 4b | Sackloch |
| 4c | Mantelfläche |
| 4d | Schneidfläche |
| 5 | Zapfen |
| 6 | Zapfen |
| 7 | Bohrung |
| 8 | Bohrung |
| 9 | Schulter |
| 10 | Schulter |
| 11 | Schneidkante |
| 12 | Schneidkante |
| 13 | Vorrichtung |
| 13a | Unterteil |
| 13b | Oberteil |
| 14 | Drückwerkzeug |
| 14a | Ringzacke |
| 15 | Drückwerkzeug |
| 15a | Ringzacke |
| 16 | Stempel |
| 16a | Zentrierspitze |
| 17 | Stempel |
| 17a | Zentrierspitze |
| 18 | Verdrängungsring |
| 19 | Verdrängungsring |
| D1 | Außendurchmesser Bolzen |
| D2 | Innendurchmesser Bohrung |
| D3 | Außendurchmesser Zapfen |
| a1 | Abstand der Führungsscheiben vor dem Einschneiden |
| a2 | Abstand der Führungsscheiben nach dem Einschneiden |
| s | Wandstärke der Führungsscheiben |

**Patentansprüche**

1. Planetenrad-Einheit (1), aufweisend zwei parallel zueinander angeordnete Führungsscheiben (2, 3) mit Lochungen (7, 8) zur Aufnahme von Bolzen (4), welche stirnseitig angeordnete Zapfen (5, 6) und Schultern (9, 10) aufweisen, wobei die Schultern (9, 10) umlaufende Schneidkanten (11, 12) aufweisen und **dadurch gekennzeichnet, dass** die Bolzen (4), die zumindest im Bereich der Schneidkanten (11, 12) gehärtet sind, mittels der Schneidkanten (11, 12) in die Führungsscheiben (2, 3) eingeschnitten sind und die Schultern (9, 10) gegen einen durch das Einschneiden gebildeten Ring (18, 19) von verdrängtem Material der Führungsscheiben (2, 3) abgestützt sind.

2. Planetenrad-Einheit nach Anspruch 1, **dadurch gekennzeichnet, dass** die Bolzen (4) als Planetenbolzen zur Lagerung von Planetenrädern ausgebildet sind.

3. Planetenrad-Einheit nach Anspruch 1, **dadurch gekennzeichnet, dass** die Bolzen (4) als Nietbolzen zur Abstandshaltung und zur Übertragung von Kräften zwischen den Führungsscheiben (2, 3) ausgebildet sind.

4. Planetenrad-Einheit nach Anspruch 1, 2 oder 3, **dadurch gekennzeichnet, dass** die Bolzen (4) als Planeten- und Nietbolzen ausgebildet sind.

5. Planetenrad-Einheit nach einem der Ansprüche 1 bis 4, **dadurch gekennzeichnet**, die Führungsscheiben (2, 3) im Bereich der Lochungen (7, 8) eine Dicke s aufweisen und dass die Schneidkanten (11, 12) bis zu einem Bruchteil der Dicke s, vorzugsweise etwa bis zur Hälfte der Dicke s, eingeschnitten sind.

6. Planetenrad-Einheit nach einem der Ansprüche 1 bis 5, **dadurch gekennzeichnet, dass** auf den Führungsscheiben (2, 3) konzentrisch zu den Lochungen (7, 8) ringförmige Rillen (2a, 3a) für den Eingriff von Ringzacken (14a, 15a) von Drückwerkzeugen (14, 15) angeordnet sind.

## Claims

1. Planet wheel unit (1), having two guide discs (2, 3) arranged parallel to one another and having perforations (7, 8) for the reception of bolts (4) which have, arranged on the end faces, tenons (5, 6) and shoulders (9, 10), the shoulders (9, 10) having peripheral cutting edges (11, 12), **characterized in that** the bolts (4), which are hardened at least in the region of the cutting edges (11, 12), are cut into the guide discs (2, 3) by means of the cutting edges (11, 12), and the shoulders (9, 10) are supported against a ring (18, 19) of displaced material of the guide discs (2, 3), the same ring being formed as a result of the cutting-in action.

2. Planet wheel unit according to Claim 1, **characterized in that** the bolts (4) are designed as planet bolts for the mounting of planet wheels.

3. Planet wheel unit according to Claim 1, **characterized in that** the bolts (4) are designed as clinched bolts for spacing and for the transmission of forces between the guide discs (2, 3).

4. Planet wheel unit according to Claim 1, 2 or 3, **characterized in that** the bolts (4) are designed as planet and clinched bolts.

5. Planet wheel unit according to one of Claims 1 to 4, **characterized in that** the guide discs (2, 3) have a thickness s in the region of the perforations (7, 8), and **in that** the cutting edges (11, 12) are cut in up to a fraction of the thickness s, preferably up to about half of the thickness s.

6. Planet wheel unit according to one of Claims 1 to 5, **characterized in that** annular grooves (2a, 3a) for the engagement of knife-edged rings (14a, 15a) of spinning tools (14, 15) are arranged on the guide discs (2, 3) concentrically with respect to the perforations (7, 8).

## Revendications

1. Unité de pignon planétaire (1), présentant deux disques de guidage (2, 3) disposés parallèlement l'un à l'autre, avec des perçages (7, 8) pour recevoir des boulons (4), qui présentent des tourillons (5, 6) et des épaulements (9, 10) disposés du côté frontal, les épaulements (9, 10) présentant des arêtes de coupe périphériques (11, 12) et **caractérisée en ce que** les boulons (4), qui sont trempés au moins dans la région des arêtes de coupe (11, 12), sont taraudés au moyen des arêtes de coupe (11, 12) dans les disques de guidage (2, 3) et les épaulement (9, 10) sont supportés contre une bague (18, 19) formée par le taraudage, en matériau repoussé des disques de guidage (2, 3).

2. Unité de pignon planétaire selon la revendication 1, **caractérisée en ce que** les boulons (4) sont réalisés sous forme de boulons planétaires pour le support de pignons planétaires.

3. Unité de pignon planétaire selon la revendication 1, **caractérisée en ce que** les boulons (4) sont réalisés sous forme de boulons rivetés pour l'espacement et le transfert des forces entre les disques de guidage (2, 3) .

4. Unité de pignon planétaire selon la revendication 1, 2 ou 3, **caractérisée en ce que** les boulons (4) sont réalisés sous forme de boulons planétaires et rivetés.

5. Unité de pignon planétaire selon l'une quelconque des revendications 1 à 4, **caractérisée en ce que** les disques de guidage (2, 3) présentent dans la région des perçages (7, 8) une épaisseur s et **en ce que** les arêtes de coupe (11, 12) sont taraudées jusqu'à une partie de rupture d'épaisseur s, de préférence approximativement jusqu'à la moitié de l'épaisseur s.

6. Unité de pignon planétaire selon l'une quelconque des revendications 1 à 5, **caractérisée en ce que** l'on dispose sur les disques de guidage (2, 3) concentriquement aux perçages (7, 8) des gorges annulaires (2a, 3a) pour l'engagement de dents annulaires (14a, 15a) d'outils de pression (14, 15).

14
13
14a

16
16a

D2
D3

2
6
4

1

9, 11
5
17a
13a
17

2a
8
10, 12
X
4a

4b
7
3
3a
15a
15

Fig. 1

4d
12
4c
α
4

Fig. 1a

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1214536 B1
- EP 1266154 B1
- DE 102004057576 A1

**In der Beschreibung aufgeführte Nicht-Patentliteratur**

- Umformtechnik. **K. Lange.** Blechbearbeitung. Springer-Verlag, 1990, vol. 3